# EUROPEAN PATENT SPECIFICATION

(11) **EP 1 155 818 B1**
(45) Date of publication and mention of the grant of the patent: **07.03.2007**
(21) Application number: 99961333.4
(22) Date of filing: 22.12.1999
(51) Int. Cl.: B32B 15/08, B32B 9/00, B32B 27/00

(54) **MULTILAYERED FILM AND PROCESS FOR PRODUCING THE SAME**
MEHRSCHICHTIGER FILM UND VERFAHREN ZU DESSEN HERSTELLUNG
FILM MULTICOUCHE ET SON PROCEDE DE FABRICATION

(43) Date of publication of application: 21.11.2001
(73) Proprietor: TORAY INDUSTRIES, INC., Tokyo 103-8666 (JP)
(72) Inventor: HATADA, Kenji, Kurita-gun Shiga 520-3035 (JP)
(74) Representative: Kador & Partner
(86) International application number: PCT/JP1999/007237
(87) International publication number: WO 2001/045930

(56) References cited:
- WO-A-97/37844
- JP-A- 7 034 220
- JP-A- 61 258 333
- US-A- 4 490 774
- US-A- 4 842 893
- DATABASE WPI Section Ch, Week 200032 Derwent Publications Ltd., London, GB; Class A32, AN 2000-368943 XP002196120 & JP 2000 094578 A (TORAY IND INC), 4 April 2000 (2000-04-04)

## Description

### Technical Field

The present invention relates to a multilayer film having gas barrier properties which is used for a metallized packaging film or a metallized film used for a capacitor and the like.

### Background Art

A metallized film in which a metal such as aluminum or a metal oxide such as SiOₓ and Al₂Oₓ are deposited on a film such as a polyethylene terephthalate film or a polypropylene film has excellent oxygen barrier properties or water vapor barrier properties, and has been widely employed as a food packaging film. A drawback of such metallized film is that when the film is stretched, the metal deposited layer or the metal oxide deposited layer cracks thereby the barrier properties are impaired. A current problem is that when the film is made into a bag, the film is folded and drawn by the sailor of a bag-making machine, cracks occur in the deposited layer to impair the gas barrier properties. In the case of a metal oxide deposited layer, a serious problem is that when the metal oxide deposited layer is subjected to printing, the printing ink causes chemical changes of the metal oxide thereby the barrier performance is lowered.

As a means to cope with such problems, a process of coating a resin on the metal or metal oxide deposited film has been developed for commercial use, however, a problem of such a film is that the production cost is increased as two processes i.e., the deposition process and the coating process, are required and the high price restricts the uses of the film.

U.S. Patent No. 5,440,446 suggests a metallized film for a capacitor, which comprises a sheet material, a metal deposited layer provided thereon, and an acrylic monomer deposited on the metal deposited layer, which is then crosslinked with an electron beam to form an acrylic polymer resin layer, as well as a metallized packaging film comprising a sheet material, an acrylic polymer resin layer provided thereon in the similar manner, a metal deposited layer formed thereon and an acrylic polymer resin layer provided in the similar manner on the metal deposited layer.

On the other hand, U.S. Patent Nos. 4,842,893 and 5,032,461 suggest a process for forming a polymer resin layer in which an acrylic (methacrylic) ester is evaporated by an evaporator in a deposition apparatus for depositing a metal, and deposited on the metal deposited layer, then the acrylic (methacrylic) ester is polymerized by an electron beam to form a polymer resin layer.

The method suggested in the U.S. Patent No. 5,440,446, however, has the following problems.
1. The polymer resin layer formed from the acrylic (methacrylic) ester has weak adhesion with the underlying metal deposited layer. It has a weak adhesion with an adhesive or a molten and extruded olefinic resin (such as LLDPE), which is applied on said polymer resin layer as an adhesive during laminating process with other film which is carried out for making a bag, and easily peeled off therefrom.
2. The film to which a polymer resin layer formed from the acrylic (methacrylic) ester is laminated, has a high friction coefficient, and cannot be laminated as the film is wrinkled during lamination process. The method suggested in the U.S. Patent Nos. 4,842,893 and 5,032,461 has the following problems.
3. The acrylic (methacrylic) ester is thermally polymerized and adhered onto an apparatus in the evaporator for atomizing said monomer, and the apparatus becomes inoperable in the long run. In such a case, the acrylic (methacrylic) ester cannot be atomized, and sent in the form of a liquid droplet to the heated evaporator, and thermally polymerized therein thereby the evaporator is plugged with the polymerized material.
4. The acrylic acid, acrylic ester, methacrylic acid, and methacrylic ester type monomers cause irritation to skin, have a strong odor, and are not easily handled.

### Disclosure of Invention

An object of the present invention is to solve the above-mentioned problems and to provide a multilayer film having high quality and high processability which can be stably produced.

Such object of the present invention can be achieved by a multilayer film comprising a base material, a polymer resin layer and a metal deposited layer and/or a metal oxide deposited layer provided thereon, wherein the polymer resin layer contains a polymer produced by polymerization of an unsaturated compound having two or more ethylenic bonds and/or acetylenic bonds in one molecule and having neither acrylic group nor methacrylic group, in an amount of 80 % by weight or more based on the polymer resin layer, wherein the unsaturated compound is one or more compounds selected from an unsaturated fatty acid, an unsaturated fatty ester, and a terpene having an unsaturated bond.

The object of the present invention can be also achieved by a method of producing a multilayer film in which a polymer resin layer and a metal deposited layer and/or a metal oxide deposited layer are deposited on a base material in a vacuum deposition apparatus, wherein an unsaturated compound having two or more ethylenic bonds and/or acetylenic bonds in one molecule and having neither acrylic group nor methacrylic group, is deposited, wherein the unsaturated compound is one or more compounds selected from an unsaturated fatty acid, an unsaturated fatty ester, and a terpene having an unsaturated bond, then the unsaturated compound is irradiated with energy rays to form said polymer resin layer.

### Brief Description of the Drawings

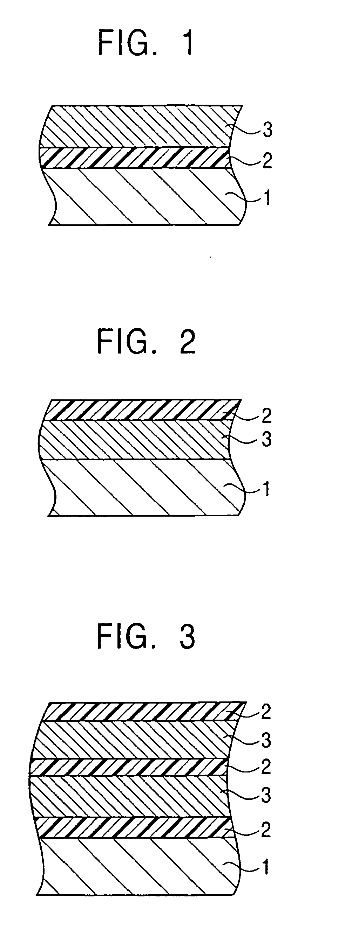

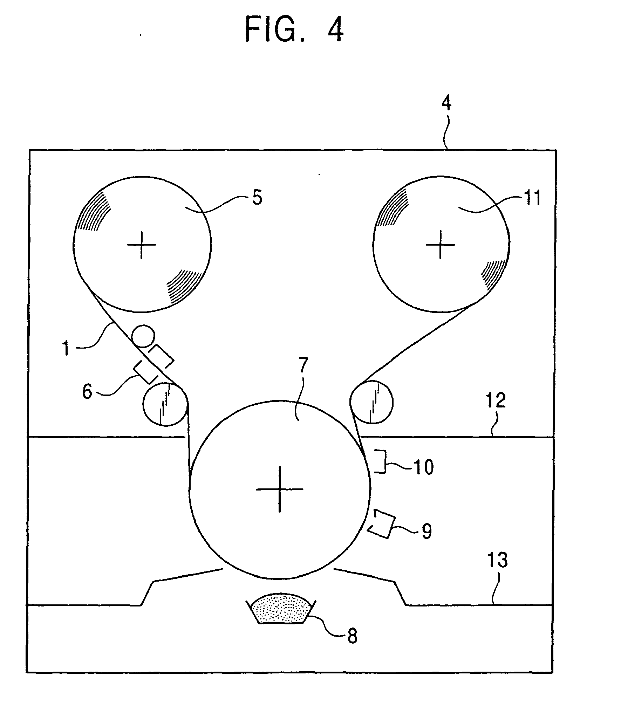

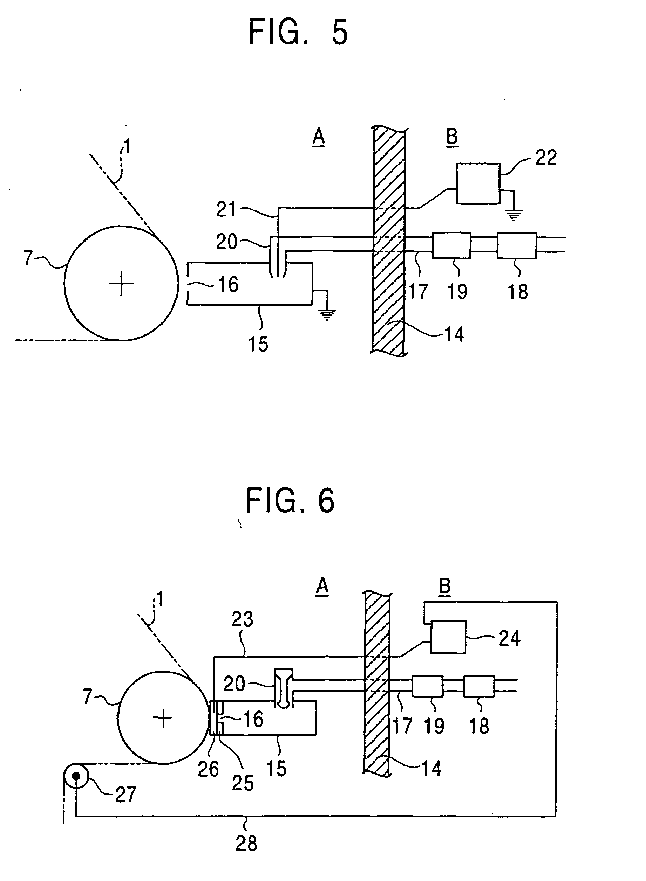

Fig. 1, Fig. 2 and Fig. 3 are views to illustrate different constructions of multilayer films according to the present invention; Fig. 4 is a schematic illustration of one example of an apparatus for producing a multilayer film according to the present invention; Fig. 5 is a schematic illustration of an apparatus to atomize an unsaturated compound by applying an electric voltage to the unsaturated compound in a process for depositing the unsaturated compound; and Fig. 6 is a schematic illustration of one example of an apparatus for applying an electric voltage between a monomer evaporator and a base material in a process wherein an unsaturated compound is atomized and deposited.

### Best Mode for Carrying Out the Invention

Base materials according to the present invention are not particularly limited as far as they allow deposition of a metal or a metal oxide, but preferable examples thereof include unoriented or oriented films comprising an organic polymer resin including polyethylene, polypropylene, and polyester such as polyethylene terephthalate, and polyethylene naphthalate, polyamide, polystyrene and polycarbonate or foils comprising a metal such as aluminum and copper. Among these, a film comprising polypropylene or a polyester is preferably employed. The surface of the base material can be subjected to surface treatment such as corona discharge treatment, flame treatment, and plasma treatment or lamination of a resin layer by melt extrusion or coating a resin layer can be carried out for improving the adhesive properties. Among these, the most preferred is plasma treatment.

Materials for the metal deposited layer according to the present invention are not particularly limited, and a metal such as Al, Cu, Sn, In, and Zn or a mixture of two or more kinds of metals, or alloys can be used. Materials for the metal oxide deposited layer are not particularly limited, and a metal oxide such as SiOₓ, Al₂Oₓ, InOₓ, and SnOₓ or a compound or a mixture of two or more kinds of the metal oxides can be employed. The oxide deposited layer according to the present invention includes an incomplete oxide deposited layer.

The thickness of a deposited layer can be appropriately selected according to the required characteristics of the film. The thickness of a metal deposited layer is preferably of from 0.01 µm to 1 µm from the view points of barrier characteristics, conductivity and the flexibility of the deposited film. The thickness of a metal oxide layer deposited layer is preferably of from 0.006 µm to 0.5 µm from the view points of barrier properties, dielectric strength and flexibility.

The construction of the multilayer film according to the present invention can be, depending on its use, one illustrated in Fig. 1 comprising a base material 1/a polymer resin layer 2/a metal deposited layer and/or metal oxide deposited layer 3, one illustrated in Fig. 2 comprising a base material 1/a metal deposited layer and/or metal oxide deposited layer 3/a polymer resin layer 2, or one illustrated in Fig. 3 wherein these structures are laminated each other.

For example, for improving the barrier performance of a deposited packaging film, or for controlling the degradation of the barrier performance of a deposited packaging film during bag making process, a structure in which a base material/a metal deposited layer and/or a metal oxide deposited layer/a polymer resin layer laminated in this order is preferred; for improving barrier performance, a structure in which a base material/a polymer resin layer/a metal deposited layer or/and a metal oxide deposited layer, laminated in this order is preferred. With respect to a deposited film for a capacitor, for preventing the metal deposited layer from corrosion by water penetrating the base material, or for improving the self-healing properties, a structure in which a base material/a polymer resin layer/a metal deposited layer and/or a metal oxide deposited layer, laminated in this order is preferred. In order to improve the moisture resistance, a structure in which a base material/a metallized film and/or a metal oxide deposited film/a polymer resin layer, laminated in this order is preferred. Some 10 or some 1000 layers comprising a metal deposited layer and/or a metal oxide deposited layer/a polymer resin layer can provide a small-sized laminate capacitor.

When a metal deposited layer or a metal oxide deposited layer is provided on a polymer resin layer, the surface of the polymer resin layer can be subjected to plasma treatment to improve the adherence.

Of course, the construction of the present invention is not limited to these and any number of metal deposited layers, metal oxide deposited layers, and polymer resin layers can be laminated in any order on a base material.

The thickness of the polymer resin layer according to the present invention is preferably not less than 0.02 µm and not more than 1 µm. A thickness of less than 0.02 µm will have a little effect on improving the quality, and a thickness of more than 1 µm will provide such problems that the resulting metallized film becomes sticky or in a case of a deposited film for a capacitor, a higher electrical loss tangent is generated due to interfacial polarization. The more preferred thickness is not less than 0.05 µm and not more than 0.5 µm.

The polymer resin layer according to the present invention is required to include a polymer obtained by polymerization of an unsaturated compound having at least two ethylenic bonds and/or acetylenic bonds and neither acrylic group nor methacrylic group in its molecule, in an amount of 80 % by weight or more based on the polymer resin layer. Since such unsaturated compound is not susceptible to thermal polymerization or curing in vacuum, in comparison with the acrylic type compound or methacrylic type compound, it is less likely that this material plugs the evaporator. Further, since such unsaturated compound is easily polymerized and/or cured by energy rays, it allows steady production of a multilayer film.

The unsaturated compound is one or more compounds selected from an unsaturated fatty acid, an unsaturated fatty ester, and a terpene having an unsaturated bond due to their high heat stability and good polymerizable and/or crosslinkable properties by the energy rays. Among them, an unsaturated fatty acid, an unsaturated fatty ester and a terpene having an unsaturated bond which are isolated from natural substances are more preferred as they cause less skin irritation and have weaker undesirable odors. Among them, a drying oil and a semi-drying oil are preferred since they are polymerized and/or crosslinked by an energy beam to provide a polymer. In particular, an unsaturated compound having an iodine value of 100 or more is preferred due to its quality, processability and productivity.

"Isolated from natural substances" means not only pressing or extracting a substance from natural substances, but also further reaction such as hydrolysis of a pressed or extracted material, or isolation of a part of the component of the pressed or extracted material, or a combination of two or more kinds of such processes.

Examples of an unsaturated fatty acid, unsaturated fatty ester and terpene having an unsaturated bond according to the present invention include natural oils and fats containing the same or a hydrolysate of a material extracted from such natural oils and fats. Among these, one or more compounds selected from castor oil, coconut oil, soybean oil, linseed oil, palm kernel oil, safflower oil, china wood oil, tall oil, oleic acid, linolic acid, linolenic acid, ricinoleic acid, eleostearic acid, triglyceride linoleate, triglyceride linolenate, citral, citronellal, citronellol, nerolidol, geraniol, milsen, linalool, and limonene are particularly preferred.

In addition to these unsaturated compounds, other radically polymerizable organic monomer can be added in an amount of up to 20 % by weight. When the amount is up to 20 % by weight, an organic monomer having acryloyl group such as pentaerythritol triacrylate can be added without increasing the possibility of thermal polymerization, thereby causes little problem in the production.

The multilayer film according to the present invention has good adhesion between the polymer resin layer and the metal deposited layer or a metal oxide deposited layer, and when it is laminated with other resin, the adhesion with the laminated resin or with the adhesive agent used for lamination is good as well, and has a low friction coefficient, thereby allows the lamination process without generating wrinkles in the metallized film. Although a polymer resin layer having a much smaller thickness, i.e. a thickness of not more than 1 µm, is laminated than that used in the conventional laminated film, as the polymer resin layer has high crosslinking degree, the metal deposited layer or the metal oxide deposited layer does not crack when the film is drawn, thereby prevents the degradation of the barrier properties of the metallized film. As the film has a low water permeation, there are other features including that the deposited layer of the metallized film has a slow corrosion rate under high humidity conditions. Due to these superior characteristics, the multilayer film according to the present invention is suited for a packaging film or a film for a capacitor.

The multilayer film according to the present invention can be produced in a vacuum deposition apparatus by deposition of a polymer resin layer and a metal deposited layer and/or a metal oxide deposited layer on a base material, wherein an unsaturated compound having at least two or more ethylenic bonds and/or acetylenic bonds and neither acrylic group nor methacrylic group in one molecule is deposited then irradiated with an energy beam to form said polymer resin layer.

Now referring to Fig. 4, which is a schematic illustration of one example of an apparatus for producing a multilayer film according to the present invention, one example of a process for producing a multilayer film according to the present invention will be explained. In a vacuum deposition apparatus 4, a base material 1 is unwinded from an unwinding roll 5 then the surface of the base material is subjected to plasma surface treatment by a plasma treatment apparatus 6. Then a metal and/or a metal oxide evaporated from a metal evaporation source 8 is deposited on the surface treated base material on a cooling drum 7. Then an unsaturated compound evaporated from a monomer evaporator 9 is deposited on the deposited layer, and it is irradiated with an energy beam by employing an energy beam irradiation apparatus 10 to polymerize and/or crosslink said unsaturated compound to form a polymer resin layer comprising the polymerized and/or crosslinked product of said unsaturated compound, and the film is rolled on a winding roll 11. In the Fig. 4, a numeral 12 denotes a vacuum partition plate for providing the difference in the degree of vacuum between a base material unwinding and winding chamber and an evaporation source chamber, and a numeral 13 denotes a masking plate to prevent the evaporating metal particles from depositing onto the whole area inside the vacuum chamber. In this schematic illustration, a vacuum evacuation system, an evacuation line, and power lines for a plasma treatment apparatus 6, a monomer evaporator 9, an energy beam irradiation apparatus 10 and the like, a monomer pipe line for a monomer evaporator 9, or rolls for travelling the base material and the like are omitted.

A method for depositing an unsaturated compound is not particularly limited, but in a preferred process the unsaturated compound is atomized and allowed to impinge upon a heated wall of the vessel and evaporated and deposited on the base material or the metal and/or metal oxide deposited layer. As the unsaturated compound employed according to the present invention is resistant to thermal polymerization even in vacuum, such an atomization apparatus employing an ultrasonic vibrator as disclosed in U.S. Patent No. 4,696,719 can be employed as well.

In a more preferable method, an unsaturated compound is atomized by applying electricity, then introduced into the evaporator and allowed to impinge with the heated inner wall of the evaporator and the unsaturated compound mist is evaporated and deposited on the base material. In a preferred process for applying electricity, an unsaturated compound is allowed to contact with an electricity applying electrode to which an electric voltage is applied.

A schematic illustration of one example of an apparatus for carrying out the present process (Fig. 5) will be employed for detailed explanation. The apparatus is constructed of a vacuum wall 14, an evaporator 15 having an aperture 16, an unsaturated compound transporting pipe 17, a proportioning pump 18, an on-off valve 19, an atomizing pipe 20, an electrode 21, and a power source 22.

The side A of the vacuum wall 14 is kept under vacuum condition, and the base material 1 travels on a cooling drum 7. The side B is exposed to the atmosphere.

The unsaturated compound is degassed and sent from an organic compound supplying tank where it is stored (not shown in the Figure) through the unsaturated compound transporting pipe 17, and a specified amount thereof is sent to the atomizing pipe 20 by the metering pump 18 which can maintain vacuum, through the on-off valve 19. The electrode 21 is inserted into the atomizing pipe 20. Electricity is applied to the unsaturated compound by said electrode 21 and the compound is charged with static electricity and made into the form of a mist, then sprayed onto the inner wall of the evaporator 15 kept at an elevated temperature. The sprayed unsaturated compound is evaporated on impinging upon the heated inner wall of the evaporator 15 and adhered on the surface of the base material 1 through the narrow aperture 16 at an end of the evaporator. As said base material 1 is cooled by the cooling drum 7, the unsaturated compound adhered on the base material 1 coheres and is deposited on the surface of said base material 1 to form a thin film.

The spraying pipe 20 is electrically and thermally insulated from the organic compound transporting pipe 17 and the evaporator 15, and the electrode 21 to apply an electric voltage to the unsaturated compound is installed therein. The electrode 21 is electrically insulated from the spraying pipe 20. The electrode 21 is a bare metal inside the spraying pipe 20 but it is coated with an insulating material outside the pipe and connected to the power source 22 so that the electric voltage and the electric current are supplied therefrom.

The electric voltage and the electric current supplied from the power source 22 can be either DC, AC or DC superposed AC, however, since an unsaturated compound is generally dielectric, DC superposed AC is preferred. The polarity of the electric voltage applied to the electrode 21 can be either positive or negative against the evaporator 15, and the electric voltage depends on the degree of vacuum and the distance between the electrode 21 and the evaporator 15, and a preferable peak voltage is around 100 V - 10 KV. If it is less than 100 V, the amount of the static electricity charged by the unsaturated compound is too small to make the unsaturated compound into a fine mist, and a voltage of more than 10 KV tends to provide an arc discharge between the electrode 21 and the evaporator 15 and the mist of the unsaturated compound becomes unstable. More preferred voltage is between 300 V and 6 KV.

As mentioned above, electricity is preferably applied by an electrode, however it is possible to apply electricity to the unsaturated compound without employing an electrode, but by supplying an electric voltage directly from the power source to the spraying pipe which is electrically insulated from other elements such as the unsaturated compound transporting pipe, the evaporator and the vacuum wall. In this case, the electric voltage applied to the spraying pipe is preferably of from 100 V to 1 KV. A voltage of less than 100 V cannot sufficiently atomize the organic compound and a voltage of more than 1 KV tends to provide an arc discharge between the tip portion of the spraying pipe and the evaporator. The more preferable electric voltage is of from 300 V to 600 V.

The atmosphere used for carrying out the present invention is not necessarily limited to vacuum, and the present invention can be carried out in an air, however vacuum is preferred in that the evaporated unsaturated compound has a longer mean free path and a homogeneous and thin deposited coat layer can be formed on the surface of the base material.

The temperature of the evaporator can be such that the entire inner wall thereof is heated to at least a temperature at which the vapor pressure of the unsaturated compound becomes not less than the pressure in the evaporator.

There is a possibility that inside the apparatus becomes contaminated with said unsaturated compound as the evaporated unsaturated compound diffuses inside the apparatus, or the unsaturated compound once deposited on the base material is re-evaporated and deposited on the inner wall or other elements of the apparatus apart from the base material to form a coat. The unsaturated compound adhered inside the apparatus interferes with the stable motion of the driving system in the apparatus and it may stop the movement thereof in an extreme case. In addition to that, a long time is required for cleaning and there is a possibility of causing such a problem as reduction of productivity.

In a preferable process for solving this problem, an unsaturated compound is atomized and allowed to impinge upon a heated wall of the apparatus, thereby evaporated and deposited upon the metal deposited layer and/or metal oxide deposited layer through an aperture of said heated apparatus, wherein the unsaturated compound is deposited while an electric voltage is applied between the aperture of said heated apparatus and the metal deposited layer and/or metal oxide deposited layer.

The present process is illustratively explained employing the schematic illustration (Fig. 6) of an example of a preferable apparatus for carrying out the present process. However, the present invention is not limited to this apparatus. The apparatus comprises a vacuum wall 14, an evaporator 15 having an aperture 16, an unsaturated compound transporting pipe 17, a proportioning pump 18, an on-off valve 19, an atomizing pipe 20 having a built-in ultrasonic vibrator, lead wires 23 and 28 for applying an electric voltage, a power source 24, and a metal roll 27 for applying an electric voltage to a base material 1. The aperture comprises a metallic electrode plate 26 having a plurality of fine holes, or a mesh structure, an insulation plate 25 which electrically insulates said electrode plate from the evaporator 15, and a narrow aperture provided in the evaporator 15. The electrode plate 26 and the metal roll 27 are attached to the power source 24 by lead wires 23 and 24 respectively and a voltage is placed between the electrode plate 26 and the metal roll 27.

Side A of the vacuum wall 14 is kept under vacuum and the base material 1 travels on a cooling drum 7. The metal deposited layer on the base material 1 is contacted with the metal roll 14, thereby a voltage is applied thereto from the power source 11. Side B is exposed to the atmosphere.

The unsaturated compound is degassed and sent from an unsaturated compound supplying tank (not shown in the Figure) in which it is stored through the unsaturated compound transporting pipe 17, and a specified amount thereof is sent to the atomizing pipe 20 through the on-off valve 19 by the proportioning pump 18 which can maintain vacuum. The atomizing pipe 20 has a built-in ultrasonic vibrator and the unsaturated compound brought into contact with the vibrator (horn) in the atomizing pipe is made into a mist by the ultrasonic vibration of the horn and sprayed onto the inner wall of the evaporator 15 which is kept at an elevated temperature (in Fig. 6, an ultrasonic wave power source and an ultrasonic wave vibration generating apparatus are not shown. The details of the ultrasonic vibrator are not shown in the Figure.) The sprayed unsaturated compound is evaporated on impinging upon the inner wall of said heated evaporator 15 and released into the inner space of the deposition apparatus through the aperture 16 at the tip of the evaporator. Since a voltage is applied between the electrode plate 26 at the aperture and the base material 1, the vapor is charged with electricity and guided by the electric field between the aperture 16 and the base material 1 and adheres on the surface of the base material 1 by electrostatic force. As said base material 1 is cooled by the cooling drum 7, the unsaturated compound adhered on said base material 1 easily coheres and a thin film of the unsaturated compound is formed on the surface of said base material 1. Since the unsaturated compound on the base material is adhered on said base material with the electrostatic force, it is less likely that the adhered organic compound is re-evaporated.

The electric voltage can be directly applied to the evaporator 15. In this case, it is preferable that a plurality of fine holes are provided at the aperture of the evaporator 15 or the aperture is made to have a mesh structure.

The electric voltage and the current supplied from the power source 24 can be either DC, AC or DC superposed AC, however, since an unsaturated compound is generally dielectric, DC superposed AC is preferred. The electric voltage depends on the degree of vacuum and the distance between the base material 1 and the evaporator 15, and a preferable peak voltage is around 50 V - 10 KV. If it is less than 50 V, the amount of the static electricity charged by the unsaturated compound is too small, and the vapor of the unsaturated compound tends to be diffused in the inner space of the deposition apparatus apart from the base material. A voltage of more than 10 KV tends to provide an arc discharge between the base material or a metal member in the deposition apparatus and the aperture 16 or the metal roll 27, and the unsaturated compound adhering condition becomes unstable. More preferred voltage is between 100 V and 3 KV.

The energy rays according to the present invention refer to ultraviolet rays, electron beam, ion particles, α-rays, β-rays, γ-rays, excited atoms, excited molecules, plasma and the like. In particular one or more energy rays selected from ultraviolet rays, ions such as ionized atoms and ionized molecules, excited atoms or excited molecules are preferred. As these energy rays exist in a plasma of a gas comprising a compound having an oxygen atom in the molecule, which is optionally mixed with other gas, a plasma of a gas containing oxygen atoms can also be preferably employed as energy rays. Though ions or excited gas particles in a plasma do not generally penetrate deep into the unsaturated compound layer, as the unsaturated compound layer according to the present invention is thin, the entire unsaturated compound layer can be polymerized and/or crosslinked.

In a case where an acrylic (methacrylic) monomer is employed, it is known that the oxygen works as a radical trapping agent to inhibit the polymerization, however, according to the present invention the unsaturated compound can be polymerized and/or crosslinked by oxygen, therefore the oxygen gas plasma can be more suitable energy rays.

Now the present invention will be described in details by the use of the following embodiments, which will not limit the present invention.

### EXAMPLE 1

Aluminum was deposited on a biaxially oriented polypropylene film (manufactured by Toray Industries, Inc. under the trade name of "Torayfan") having a thickness of 18 µm, having been subjected to surface treatment in a vacuum deposition apparatus which was evacuated to 5 x 10⁻³ Pa such that the absorbance OD became 2.3. Then linolenic acid atomized by an ultrasonic vibrator was supplied into a monomer evaporator which was heated to 200°C and the evaporated linolenic acid was deposited on said aluminum deposited layer through a slit provided in the evaporator. The amount of the linolenic acid supplied to the ultrasonic vibrator was controlled such that the thickness of the deposited linolenic acid layer became 0.06 µm.

Then a mixed gas comprising Ar gas and oxygen (oxygen gas concentration of 30 mol%) was supplied to inside a box-shaped anode of an energy rays irradiation apparatus. Inside said anode, a cathode is installed being insulated from the anode. A high voltage of -10KV was applied to said cathode to cause a glow discharge inside the box-shaped anode and a plasma was formed. A part of the high energy electrons, Ar ions and oxygen gas were accelerated by electric field and the linolenic acid layer on said aluminum deposited film was irradiated with these coming through a slit provided in the anode, and the linolenic acid was polymerized to provide a polymer resin layer having a thickness of 0.06 µm. This process was continuously carried out by the use of a film roll having a length of 21000 m at the deposition rate of 500 m/min. Stable deposition was carried out for about 45 minutes and a multilayer film having nearly the same length as the original film roll was obtained.

LLDPE resin (linear low density polyethylene) was laminated on the produced multilayer film by melt extrusion, then laminated with a CPP film (unoriented polypropylene film). The lamination processability, the adherence of the laminated film, and oxygen barrier properties were examined before and after the film was stretched by 6% using a tensile tester.

All the producibility of the film, lamination processability and adherence were good, and the oxygen barrier properties (initial value) was high as it was 3.0 ml/m²day, and the durability was good as well, since the oxygen barrier properties was 3.0 ml/m² day after the film was stretched by 6 %.

The measurement and evaluation of lamination processability, adherence and oxygen barrier properties were carried out as follows.

### (1) Lamination processability

Said multilayer film and the CPP film were laminated by melt extrusion of LLDPE at 290°C using a T-die. The construction was the base material film/the metal deposited layer/the polymer resin layer/the LLDPE resin/the CPP film.

### (2) Adherence

Above-mentioned laminated film was cut to a width of 15 mm and the adhesion between the base material film and the CPP film was measured by T-peel method. Adhesive strength of 1.18 N (120 gf) or more was judged as good adherence.

### (3) Oxygen barrier properties

OX-TRAN 2/20 manufactured by MOCON-Oxygen Transmission Analysis System was employed as a measuring apparatus and the oxygen permeability of the multilayer film was measured under the conditions of 22.8°C and 0%RH. The multilayer film was stretched by 6% or 10% by a tensile tester and subjected to the measurement for the oxygen permeability and the change in the oxygen barrier properties before and after the stretching of the film were examined.

### COMPARATIVE EXAMPLE 1

A process analogous to that of Example 1 was carried out except that tetraethylene glycol diacrylate was employed as the unsaturated compound instead of linolenic acid and the obtained multilayer film was evaluated.

10 minutes after the start of the deposition, the motion of the ultrasonic vibrator stopped, and the deposition was ceased. The vacuum deposition apparatus was opened and the monomer evaporator was examined; there was a polymer deposited inside the monomer evaporator.

During the lamination process, the film was creased and showed poor lamination processability as well as poor adherence. The oxygen barrier properties were good, with the initial value being 1.5 ml/m² day and that after the film was stretched by 6 % being 1.5 ml/m² day.

Though the film showed excellent oxygen barrier properties, the producibility and the lamination processability were poor, thereby this film is difficult to be in the actual use.

### COMPARATIVE EXAMPLE 2

A multilayer film was produced in the process analogous to that of Example 1 except that the deposition of the unsaturated compound was not carried out, and the obtained film was evaluated.

The producibility, lamination processability and adherence were good and the oxygen barrier properties were relatively good before stretching as the initial value was 7.5 ml/m² day, however, after it was stretched by 6 %, the oxygen barrier properties were very much deteriorated and showed 30 ml/m² day.

### EXAMPLE 2

Aluminum was deposited on a biaxially oriented polypropylene film (manufactured by Toray Industries, Inc. available under the trade name of "Lumirror") having a thickness of 12 µm, having been subjected to surface treatment in a vacuum deposition apparatus which was evacuated to 5 x 10⁻³ Pa such that the absorbance OD became 2.3. Then soybean oil (having iodine value of 134) atomized by an ultrasonic vibrator was supplied into a monomer evaporator which was heated to 300°C and the evaporated soybean oil was deposited on said aluminum deposited layer through a slit provided in the evaporator. The amount of the soybean oil supplied to the ultrasonic vibrator was controlled such that the thickness of the deposited soybean oil layer became 0.06 µm.

Then a mixed gas comprising Ar gas and oxygen (oxygen gas concentration of 30 mol%) was supplied to inside a box-shaped grounding electrode of an energy rays irradiation apparatus. Inside said grounding electrode, a high voltage applying electrode is installed being insulated from the grounding electrode. A high-frequency voltage having the peak voltage of 600 V was applied to said high voltage applying electrode to cause a glow discharge inside the box-shaped grounding electrode and a plasma was formed. A part of the plasma was let out through a slit provided in said grounding electrode and the soybean oil layer on said aluminum deposited film was irradiated therewith, and the soybean oil was polymerized to provide a polymer resin layer having a thickness of 0.06 µm. This process was continuously carried out by the use of a film roll having a length of 21000 m at the deposition rate of 500 m/min.

Both the producibility and the lamination processability of the multilayer film produced in such a process were good, and adherence and oxygen barrier properties (initial value was 0.2 ml/m² day, and that after being stretched by 6 % was 0.2 ml/m² day) were good as well.

### EXAMPLE 3

Same polypropylene film as that employed in Example 1 was used as the base material and the surface of said film was subjected to plasma treatment in a deposition apparatus by employing a mixed gas comprising CO₂ and Ar (CO₂ gas content of 60 mol%). Then aluminum was deposited (OD:2.4) on the surface of the plasma treated film in the same manner as that used in Example 1, then a polymer resin layer having a film thickness of 0.1 µm was provided thereon by employing linseed oil (iodine value of 182) as the unsaturated compound. The produced multilayer film was evaluated in the similar manner as that used in Example 1. Both the lamination processability and adherence were good and the oxygen barrier properties were high, as the initial value was 1.6 ml/m² day. The film showed good durability since the oxygen barrier properties after being stretched by 10 % was 5.0 ml/m² day.

### EXAMPLE 4

A polymer resin layer having a thickness of 0.08 µm was provided on the polypropylene film which was subjected to plasma treatment in the similar manner as that used in Example 3 by employing a mixture of china wood oil (iodine value of 170) and linolic acid (the linolic acid content of 35 % by weight) as unsaturated compounds in the similar manner as that used in Example 1. Then aluminum oxide layer having a thickness of 0.01 µm was deposited on said polymer resin layer. The produced multilayer film showed good lamination processability, good adherence, and good barrier properties as the oxygen barrier properties, both the initial value and the value after it was stretched by 6 % were 5.0 ml/m²day, besides it showed excellent transparency as well.

### Industrial Applicability

According to the present invention, there is provided a multilayer film which can be stably produced, and which has excellent properties including lamination processability and gas barrier properties.

The multilayer film according to the present invention can be used for a metallized packaging film having gas barrier properties or a metallized film for a capacitor and the like.

## Claims

1. A multilayer film comprising a base material, a polymer resin layer and a metal deposited layer and/or a metal oxide deposited layer provided on the base material, wherein said polymer resin layer contains a polymer produced by polymerization of an unsaturated compound having two or more ethylenic bonds and/or acetylenic bonds in one molecule and having neither acrylic group nor methacrylic group, in an amount of 80 % by weight or more based on said polymer resin layer,
wherein the unsaturated compound is one or more compounds selected from an unsaturated fatty acid, an unsaturated fatty ester, and a terpene having an unsaturated bond.

2. A multilayer film according to claim 1, in which the polymer resin layer, the metal deposited layer and/or the metal oxide deposited layer are provided on the base material in this order.

3. A multilayer film according to claim 1, in which the metal deposited layer and/or the metal oxide deposited layer and the polymer resin layer are provided on the base material in this order.

4. A multilayer film according to claim 1, in which the thickness of the polymer resin layer is not less than 0.02 µm and not more than 1 µm.

5. A multilayer film according to claim 4, in which the thickness of the polymer resin layer is not less than 0.05 µm and not more than 0.5 µm.

6. A multilayer film according to claim 1, in which the unsaturated fatty acid, unsaturated fatty ester, and terpene having an unsaturated bond are compounds selected from a drying oil, a semi-drying oil, or a hydrolysate thereof, or a part of the component thereof, or a combination thereof.

7. A multilayer film according to claim 6, in which the drying oil or the semi-drying oil is a compound having an iodine value of not less than 100.

8. A multilayer film according to claim 1, in which the unsaturated fatty acid, unsaturated fatty ester, and terpene having an unsaturated bond are one or more compounds selected from castor oil, coconut oil, soybean oil, linseed oil, palm kernel oil, safflower oil, china wood oil, tall oil, oleic acid, linolic acid, linolenic acid, ricinoleic acid, eleostearic acid, triglyceride linoleate, triglyceride linolenate, citral, citronellal, citronellol, nerolidol, geraniol, milsen, linalool, and limonene.

9. A multilayer film according to claim 1, which is used for a metallized packaging film or a metallized film for a capacitor.

10. A process for producing a multilayer film in which a polymer resin layer and a metal deposited layer and/or a metal oxide deposited layer are deposited on a base material in a vacuum deposition apparatus, wherein an unsaturated compound having two or more ethylenic bonds and/or acetylenic bonds in one molecule and having neither acrylic group nor methacrylic group, is deposited, then the unsaturated compound is irradiated with energy rays to form said polymer resin layer, wherein the unsaturated compound is one or more compounds from an unsaturated fatty acid, an unsaturated fatty ester, and a terpene having an unsaturated bond.

11. A process for producing a multilayer film according to claim 10, in which the metal and/or the metal oxide is deposited on the base material then said unsaturated compound is deposited on said metal deposited layer and/or metal oxide deposited layer and said unsaturated compound is irradiated with energy rays to form the polymer resin layer.

12. A process for producing a multilayer film according to claim 10, in which said unsaturated compound is deposited on the base material, and said unsaturated compound is irradiated with energy rays to form the polymer resin layer, then the metal and/or metal oxide is deposited on said polymer resin layer.

13. A process for producing a multilayer film according to claim 10, in which the surface of the base material is previously subjected to plasma treatment.

14. A process for producing a multilayer film according to claim 10, in which the energy rays are one or more kinds of energy rays selected from a group consisting of ultraviolet rays, ions, excited atoms, and excited molecules.

15. A process for producing a multilayer film according to claim 10, in which the energy rays are a plasma of a gas containing oxygen atoms.

16. A process for producing a multilayer film according to claim 10, in which the deposition of the unsaturated compound is such that the unsaturated compound is atomized and allowed to impinge upon a heated wall of an apparatus thereby evaporated and deposited on the base material or the metal and/or metal oxide deposited layer.

17. A process for producing a multilayer film according to claim 16, in which the unsaturated compound is atomized by applying an electric voltage to the unsaturated compound.

18. A process for producing a multilayer film according to claim 16, in which the unsaturated compound is atomized and allowed to impinge upon a wall of a heated apparatus thereby evaporated and deposited on the base material or the metal and/or metal oxide deposited layer through an aperture of said heated apparatus, wherein the unsaturated compound is deposited while an electric voltage is applied between the aperture of said heated apparatus and the metal deposited layer and/or metal oxide deposited layer.

## Patentansprüche

1. Mehrschichtige Folie, umfassend:
ein Grundmaterial, ein Polymerharzschicht und eine aufgetragene Metallschicht und/oder aufgetragene Metalloxidschicht, die auf dem Grundmaterial vorgesehen ist, wobei die Polymerharzschicht ein Polymer in einer Menge von 80 Gew.-% oder mehr, auf die Polymerharzschicht bezogen, enthält, das durch Polymerisation einer ungesättigten Verbindung hergestellt worden ist, die zwei oder mehr Ethylenbindungen und/oder Acetylenbindungen in einem Molekül aufweist und weder eine Acrylgruppe noch eine Methacrylgruppe hat, wobei die ungesättigte Verbindung eine oder mehrere Verbindungen ist, die aus einer ungesättigten Fettsäure, einem ungesättigten Fettester und einem Terpen mit einer ungesättigten Bindung ausgewählt ist.

2. Mehrschichtige Folie nach Anspruch 1, wobei die Polymerharzschicht, die aufgetragene Metallschicht und/oder die aufgetragene Metalloxidschicht in dieser Reihenfolge auf dem Grundmaterial vorgesehen sind.

3. Mehrschichtige Folie nach Anspruch 1, wobei die aufgetragene Metallschicht und/oder die aufgetragene Metalloxidschicht und die Polymerharzschicht in dieser Reihenfolge auf dem Grundmaterial vorgesehen sind.

4. Mehrschichtige Folie nach Anspruch 1, wobei die Dicke der Polymerharzschicht nicht weniger als 0,02 µm und nicht mehr als 1 µm beträgt.

5. Mehrschichtige Folie nach Anspruch 4, wobei die Dicke der Polymerharzschicht nicht weniger als 0,05 µm und nicht mehr als 0,5 µm beträgt.

6. Mehrschichtige Folie nach Anspruch 1, wobei die ungesättigte Fettsäure, der ungesättigte Fettester und das Terpen mit einer ungesättigten Bindung Verbindungen sind, die aus einem schnell trocknenden Öl, einem langsam trocknenden Öl oder einem Hydrolysat davon oder einem Teil der Komponente davon oder einer Kombination davon ausgewählt ist.

7. Mehrschichtige Folie nach Anspruch 6, wobei das schnell trocknende Öl oder das langsam trocknende Öl eine Verbindung mit einer Iodzahl von nicht weniger als 100 ist.

8. Mehrschichtige Folie nach Anspruch 1, wobei die ungesättigte Fettsäure, der ungesättigte Fettester und das Terpen mit einer ungesättigten Bindung eine oder mehrere Verbindungen sind, ausgewählt aus Castoröl, Kokosnußöl, Sojabohnenöl, Leinsamenöl, Palmkernöl, Färberdistelöl, China-Holzöl, Tallöl, Oleinsäure, Linolsäure, Linolensäure, Ricinusölsäure, Holzfettsäure, Triglyceridlinoleat, Trigylceridlinolenat, Citral, Citronellal, Citronellol, Nerolidol, Geraniol, Milsen (milsen), Linalool und Limonen.

9. Mehrschichtige Folie nach Anspruch 1, die für eine metallisierte Verpackungsfolie oder einen metallisierten Film für einen Kondensator verwendet wird.

10. Verfahren zur Herstellung einer mehrschichtigen Folie, wobei eine Polymerharzschicht und eine aufgetragene Metallschicht und/oder eine aufgetragene Metalloxidschicht in einer Vakuumbeschichtungsvorrichtung auf einem Grundmaterial aufgebracht werden, wobei eine ungesättigte Verbindung, die zwei oder mehr Ethylenbindungen und/oder Acetylenbindungen in einem Molekül aufweist und weder eine Acrylgruppe noch eine Methacrylgruppe hat, aufgebracht wird, die ungesättigte Verbindung dann mit Energiestrahlen bestrahlt wird, so daß die Polymerharzschicht erzeugt wird, wobei die ungesättigte Verbindung eine oder mehrere Verbindungen ist, die aus einer ungesättigten Fettsäure, einem ungesättigtem Fettester und einem Terpen mit einer ungesättigten Bindung ausgewählt ist.

11. Verfahren zur Herstellung einer mehrschichtigen Folie nach Anspruch 10, wobei das Metall und/oder das Metalloxid auf dem Grundmaterial aufgebracht wird, danach die ungesättigte Verbindung auf der aufgetragenen Metallschicht und/oder aufgetragenen Metalloxidschicht aufgebracht wird und die ungesättigte Verbindung mit Energiestrahlen bestrahlt wird, so daß die Polymerharzschicht gebildet wird.

12. Verfahren zur Herstellung einer mehrschichtigen Folie nach Anspruch 10, wobei die ungesättigte Verbindung auf dem Grundmaterial aufgebracht wird und die ungesättigte Verbindung mit Energiestrahlen bestrahlt wird, so daß die Polymerharzschicht gebildet wird, und dann das Metall und/oder Metalloxid auf der Polymerharzschicht aufgetragen wird.

13. Verfahren zur Herstellung einer mehrschichtigen Folie nach Anspruch 10, wobei die Oberfläche des Grundmaterials vorher einer Plasmabehandlung unterzogen wird.

14. Verfahren zur Herstellung einer mehrschichtigen Folie nach Anspruch 10, wobei die Energiestrahlen eine oder mehrere Arten von Energiestrahlen sind, die aus der Gruppe ausgewählt sind, die aus UV-Strahlen, Ionen, angeregten Atomen und angeregten Molekülen besteht.

15. Verfahren zur Herstellung einer mehrschichtigen Folie nach Anspruch 10, wobei die Energiestrahlen ein Plasma eines Sauerstoffatome enthaltenden Gases sind.

16. Verfahren zur Herstellung einer mehrschichtigen Folie nach Anspruch 10, wobei das Aufbringen der ungesättigten Verbindung derart ist, daß die ungesättigte Verbindung atomisiert wird und auf eine erhitzte Wand einer Vorrichtung prallen kann, wodurch sie verdampft und auf dem Grundmaterial oder der aufgetragenen Metall- und/oder Metalloxidschicht abgelagert wird.

17. Verfahren zur Herstellung einer mehrschichtigen Folie nach Anspruch 16, wobei die ungesättigte Verbindung atomisiert wird, indem an die ungesättigte Verbindung eine elektrische Spannung angelegt wird.

18. Verfahren zur Herstellung einer mehrschichtigen Folie nach Anspruch 16, wobei die ungesättigte Verbindung atomisiert wird und dann auf die Wand einer erhitzten Vorrichtung prallen kann, wodurch sie durch eine Öffnung dieser erhitzten Vorrichtung verdampft und auf dem Grundmaterial oder der aufgetragenen Metall- und/oder Metalloxidschicht abgelagert wird, wobei die ungesättigte Verbindung abgelagert wird, während zwischen der Öffnung dieser erhitzten Vorrichtung und der aufgetragenen Metallschicht und/oder der aufgetragenen Metalloxidschicht eine elektrische Spannung angelegt wird.

## Revendications

1. Film multicouche comprenant un matériau de base, une couche de résine polymère et une couche déposée de métal et/ou une couche déposée d'oxyde de métal appliquées sur le matériau de base, dans lequel ladite couche de résine polymère contient un polymère produit par polymérisation d'un composé insaturé ayant deux liaisons éthyléniques et/ou acétyléniques ou plus dans une seule molécule et n'ayant ni groupe acrylique ni groupe méthacrylique, en quantité de 80% en poids ou plus par rapport à ladite couche de résine polymère, dans lequel le composé insaturé est formé d'un ou plusieurs composés choisis parmi un acide gras insaturé, un ester gras insaturé et/ou du terpène ayant une liaison insaturée.

2. Film multicouche selon la revendication 1, dans lequel la couche de résine polymère, la couche déposée de métal et/ou la couche déposée d'oxyde de métal sont appliquées sur le matériau de base dans cet ordre.

3. Film multicouche selon la revendication 1, dans lequel la couche de métal déposée et/ou la couche déposée d'oxyde métallique ainsi que la couche de résine polymère sont appliquées sur le matériau de base dans cet ordre.

4. Film multicouche selon la revendication 1, dans lequel l'épaisseur de la couche de résine polymère n'est pas inférieure à 0,02 µm et pas supérieure à 1 µm.

5. Film multicouche selon la revendication 4, dans lequel l'épaisseur de la couche de résine polymère n'est pas inférieure à 0,05 µm et pas supérieure à 0,5 µm.

6. Film multicouche selon la revendication 1, dans lequel l'acide gras insaturé, l'ester gras insaturé et le terpène ayant une liaison insaturée sont des composés choisis parmi une huile siccative, une huile semi-siccative ou un de leurs hydrolysats ou encore une partie d'un de leurs composants ou une de leurs combinaisons.

7. Film multicouche selon la revendication 6, dans lequel l'huile siccative ou l'huile semi-siccative est un composé ayant un indice d'iode qui n'est pas inférieur à 100.

8. Film multicouche selon la revendication 1, dans lequel l'acide gras insaturé, l'ester gras insaturé et le terpène ayant une liaison insaturée sont formés d'un ou plusieurs composés choisis parmi l'huile de ricin, l'huile de noix de coco, l'huile de fèves de soja, l'huile de graines de lin, l'huile de palme, l'huile de safran, l'huile d'abrasin, le tallol, l'acide oléique, l'acide linoléique, l'acide linolénique, l'acide ricinoléique, l'acide éléostéarique, le linoléate de triglycéride, le linolénate de triglycéride, le citral, le citronellal, le citronellol, le nérolidol, le géraniol, le milsen, le linalool et le limonène.

9. Film multicouche selon la revendication 1, qui est utilisé pour un film d'emballage métallisé ou un film métallisé pour condensateur.

10. Procédé de production d'un film multicouche, dans lequel une couche de résine polymère et une couche déposée de métal et/ou une couche déposée d'oxyde de métal sont déposées sur le matériau de base dans un appareil de dépôt sous vide, dans lequel un composé insaturé ayant deux liaisons éthyléniques et/ou liaisons acétyléniques ou plus dans une seule molécule et n'ayant ni groupe acrylique ni groupe méthacrylique est déposé, puis le composé insaturé est irradié par des rayons énergétiques pour former ladite couche de résine polymère, dans lequel le composé insaturé est formé d'un ou plusieurs composants parmi un acide gras insaturé, un ester gras insaturé et un terpène ayant une liaison insaturée.

11. Procédé de production d'un film multicouche selon la revendication 10, dans lequel le métal et/ou l'oxyde de métal est/sont déposés sur le matériau de base, puis ledit composé insaturé est déposé sur ladite couche déposée de métal et/ou ladite couche déposée d'oxyde de métal et ledit composé insaturé est irradié par des rayons énergétiques pour former la couche de résine polymère.

12. Procédé de production d'un film multicouche selon la revendication 10, dans lequel ledit composé insaturé est déposé sur le matériau de base et ledit composé insaturé est irradié par des rayons énergétiques pour former la couche de résine polymère, puis le métal et/ou l'oxyde de métal est/sont déposés sur ladite couche de résine polymère.

13. Procédé de production d'un film multicouche selon la revendication 10, dans lequel la surface du matériau de base est préalablement soumise à un traitement au plasma.

14. Procédé de production d'un film multicouche selon la revendication 10, dans lequel les rayons énergétiques sont formés d'un ou plusieurs genres de rayons énergétiques choisis parmi un groupe constitué des rayons ultraviolets, des ions, des atomes excités et des molécules excitées.

15. Procédé de production d'un film multicouche selon la revendication 10, dans lequel les rayons énergétiques sont formés d'un plasma d'un gaz contenant des atomes d'oxygène.

16. Procédé de production d'un film multicouche selon la revendication 10, dans lequel le dépôt du composé insaturé est tel que le composé insaturé soit atomisé et on lui fait heurter une paroi chauffée d'un appareil, si bien qu'il est évaporé de la sorte et déposé sur le matériau de base ou la couche déposée de métal et/ou d'oxyde de métal.

17. Procédé de production d'un film multicouche selon la revendication 16, dans lequel le composé insaturé est atomisé en appliquant une tension électrique au composé insaturé.

18. Procédé de production d'un film multicouche selon la revendication 16, dans lequel le composé insaturé est atomisé et on lui fait heurter une paroi d'un appareil chauffé si bien qu'il est évaporé de la sorte et déposé sur le matériau de base ou la couche déposée de métal et/ou d'oxyde de métal à travers une ouverture dudit appareil chauffé, dans lequel le composé insaturé est déposé, tandis qu'une tension électrique est appliquée entre l'ouverture dudit appareil chauffé et la couche déposée de métal et/ou la couche déposée d'oxyde de métal.
